# EUROPÄISCHE PATENTSCHRIFT

(11) **EP 2 463 156 B1**
(45) Veröffentlichungstag und Bekanntmachung des Hinweises auf die Patenterteilung: **16.04.2014**
(21) Anmeldenummer: 10194468.4
(22) Anmeldetag: 10.12.2010
(51) Int. Cl.: B60R 1/12, B60Q 1/26

(54) **Beleuchtungs-Zwischenstück**
Lighting connector
Elément intermédiaire d'éclairage

(43) Veröffentlichungstag der Anmeldung: 13.06.2012
(73) Patentinhaber: SMR Patents S.à.r.l., 1653 Luxembourg (LU)
(72) Erfinder: Fritz, Daniel, 70186, Stuttgart (DE)
(74) Vertreter: Weber-Bruls, Dorothée

(56) Entgegenhaltungen:
- EP-A2- 1 914 118
- EP-A2- 1 923 265
- DE-U1-202006 019 027
- US-A1- 2004 145 901
- US-A1- 2008 186 723
- US-A1- 2009 073 704

## Beschreibung

Es wird ein unitäres Beleuchtungs-Zwischenstück für den Außenspiegel eines Fahrzeugs vorgeschlagen, wobei ein Teil der Beleuchtung eine erste Funktion wie eine Blinkerfunktion ausübt, während ein anderer Teil der Beleuchtung als eine zweite Funktion wie eine Warnanzeige für Assistenzsysteme dient, wobei die Beleuchtungseinheit als Zwischenstück zwischen Spiegelkopf und Spiegelfuß gestaltet ist.

### Stand der Technik

Konventionelle Außenspiegel haben ein Design, das es erlaubt, den Spiegelkopf gegenüber dem Spiegelfuß von Hand oder motorisch in Fahrtrichtung des Fahrzeuges nach hinten abgeklappt werden kann. Zudem lässt sich der Spiegelglasträger im Spiegelkopf in der Regel vom Inneren des Fahrzeuges aus einstellen. Dadurch ist eine einwandfreie Sicht des Fahrers gewährleistet, wodurch eine hohe Verkehrssicherheit erreicht wird. Viele Außenspiegel weisen eine Blinkleuchte auf, die an der in Fahrtrichtung vorderen Seite des Spiegelgehäuses vorgesehen ist. Für neben oder hinter dem Außenspiegel befindliche Verkehrsteilnehmer ist die Blinkleuchte jedoch nicht oder nur ungenügend erkennbar. Daher werden Zusatz- LED s verwenden, die entgegen der Fahrtrichtung abstrahlen und am äußersten Rand des Außenspiegels im Blinker integriert sind,
Nach den ECE Regeln soll ein Zusatzblinklicht im Außenspiegel einen Bereich beginnend bei 5° von der Fahrzeuglängsachse bis zu 60° zur Fahrzeuglängsachse in Fahrtgegenrichtung ausleuchten.

Aus dem Stand der Technik ist einen Vielzahl an Lösungen für Blinker im Außenspiegel bekannt. Dabei werden Blinkermodule in das Gehäuse eines Außenspiegels integriert. Diese Blinkermodule enthalten je nach Design Lichtwellenleiter, Reflektoren, Leiterplatten, Linsen und Abdeckscheiben und Leuchtmittel. Die Leuchtmittel sind durch die bekannten Vorteile immer mehr LEDs.

US 2008/0186723 offenbart eine Außenspiegelanordnung nach dem Oberbegriff des Anspruchs 1.

Eine Ausführungsform ist aus der EP 0858932 bekannt. In dieser Ausführungsform wird ein Blinkermodul gebildet, das einen Lichtleiter aufweist. Der Lichtleiter bildet mit dem Gehäuse eines Außenspiegels eine stetige Kontur aus. Das Licht einer LED wird an einem Ende des Lichtleiters eingekoppelt und über die gesamte Länge transportiert. Die Abstrahlung des Lichtes erfolgt über die gesamte Länge des Lichtleiters je nach Dichte der Auskoppelvorrichtungen und am Ende des Lichtleiters. Es erweist sich, dass diese Lösung für die optimale Ausleuchtung einer Beleuchtungseinrichtung nicht ausreicht. Man erreicht mit der Lösung der fernen Einkopplung von Licht und dem Transport von 5 bis 20 cm nicht die gewünscht Lichtstärke.

Aus der US7357549 ist einen Beleuchtungseinheit bekannt, die Lichtleiterelemente aufweist, in die mindestens einen LED ragt. In dieser Ausführung wird er Lichtleiter in mehrere Abschnitte unterteilt und weist eine Aussparung entlang seiner Längenausdehnung auf. Durch die Ausnehmung im Lichtleiter, wird dieser in seiner Stabilität geschwächt und/oder die äußere stetige Oberfläche des Lichtleiters durch einen Erhebung gestört. Dadurch dass das Lichtleitmaterial optisch klar ist, ist der Lichteinkoppelpunkt von außen sichtbar, was den harmonischen Eindruck des Lichtleiters stört.

Weiterhin sind aus dem Stand der Technik Lösungen zur Anzeige einer Gefahrensituation bekannt, die an und/oder im Außenspiegel eines Fahrzeugs angebracht sind. Warnanzeigen müssen so angebracht sein, dass sie vom Fahrer des Fahrzeugs ahrgenommen werden, wenn sie aufleuchten. Es bietet sich daher eine Position an der inneren Gehäuseabdeckung des Außenspiegels an.

Hierzu sind Module bekannt, die von einem Assistenzsystem angesteuert werden und in Reaktion aufleuchten. Ein Beispiel ist die US7492281, die den Einsatz einer Warnanzeige in der Gehäuseabdeckung aufzeigt. Die Warnanzeige ist als selbstständiges Modul ausgeführt und wird getrennt von weiteren Beleuchtungseinheiten in den Spiegelkopf eingebaut.

Alle im Stand der Technik bekannten Beleuchtungselemente für unterschiedliche Aufgaben des Außenspiegels sind als einzelne Bauelemente aufgebaut und werden in den dafür vorgesehenen Öffnungen integriert. In der Serienproduktion wird durch die Öffnungen in den Abdeckungen die Anzahl der Varianten erhöht.

Es ist Aufgabe der Erfindung ein Beleuchtungsmodul zu schaffen, das die Anzahl der Varianten reduziert und so einen hohen Freiheitsgrad in der Gestaltung des Außenspiegels ermöglicht.

### Beschreibung der Erfindung

Die Aufgabe wird gelöst mit einem Spiegel mit einem Beleuchtungsmodul, das als Zwischenstück zwischen Spiegelkopf und Spiegelfuß ausgebildet ist und, wenn keine Beleuchtungsfunktionen gewünscht werden, durch eine Abdeckung auf einfache Weise ersetzt wird.

Die nachfolgenden Figuren und die Beschreibung zeigen Ausführungsformen der Erfindung, die die Erfindung beispielhaft erläutern.
- Fig. 1: zeigt einen beispielhaften Türbrüstungsspiegel
- Fig. 2: zeigt eine zweite Ausführungsform eines Türbrüstungsspiegels
- Fig. 3: zeigt einen Schnitt entlang der Drehachse
- Fig. 4: zeigt eine Ausführungsform des Beleuchtungszwischenstücks
- Fig. 5: zeigt eine zweite Ausführungsform
- Fig. 6: a, 6b und 6c zeigen weitere Ausführungsformen
- Fig. 7: und 8 zeigen einen Außenspiegel für die Montage am Spiegeldreieck
- Fig. 9: zeigt einen speziellen Außenspiegel
- Fig. 10: zeigt ein weiteres Beispiel eines Außenspiegels

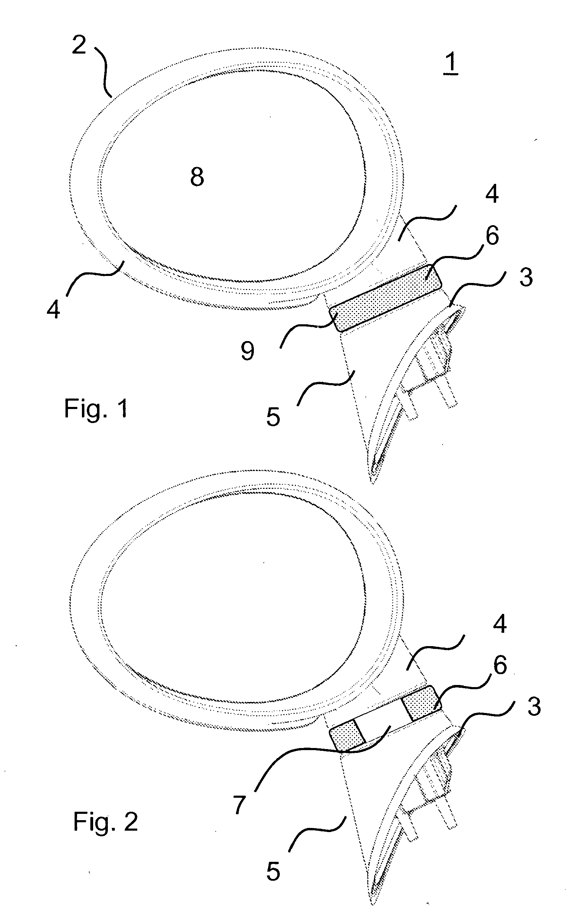

Figur 1 zeigt einen Fahrzeugaußenspiegel 1, der aus einem Spiegelkopf 2 und einem Spiegelfuß 3 besteht, die gelenkig miteinander verbunden sind. Der Einfachheit halber bezeichnet Spiegelkopf auch die im Spiegelkopf enthaltenen Elemente vor allem auch den Träger im Spiegelkopf, den Glasantrieb, den Spiegel, und alle elektrische Geräte. Der Begriff Spiegelfuß umfasst den Spiegelfuß und seine Abdeckungen. Der gezeigte Fahrzeugaußenspiegel weist einen Rahmen als Teil der Gehäuseabdeckungen 4 auf, der eine Öffnung 8 für die Installation eines Spiegelglases, einer Glasträgerplatte, eines Glasverstellantriebs sowie weiterer elektrischer oder elektronischer Funktionen umschließt.

Der Spiegelkopf 2 ist mit Gehäuseabdeckungen 4,4' verschlossen, die ein- oder mehrteilig sein können.

Das Beispiel aus Figur 1 zeigt einen Türbrüstungsspiegel, der mit der im oberen Brüstungsbereich der Vordertüren des Fahrzeugs montiert wird. Der Spiegelfuß 3 wird dabei mit der Tür verschraubt und nach außen mit einer Spiegelfußabdeckung 5 abgedeckt. Zwischen der Spiegelfußabdeckung 5 und der Gehäuseabdeckung 4 ist ein Beleuchtungs-Zwischenstück 6 eingebaut. Das Beleuchtungs-Zwischenstück weist in dieser Ausführungsform ein umlaufendes Lichtfenster 9 auf.

In diesem Ausführungsbeispiel kann das Beleuchtungs-Zwischenstück als Blinker oder als Warnanzeige eingesetzt werden. Auch einen Funktion als Sicherheitsleuchte oder Positionsleuchte ist möglich.

In Figur 2 ist ein Außenspiegel derselben Art dargestellt. Das Beleuchtungs-Zwischenstück 6 in dieser Ausführungsform weist Lichtfensterabschnitte 9 sowie eine dazwischen angeordnete nicht transparente Abdeckung 7 auf. Dadurch wird das Lichtfenster in zwei sichtbare Bereiche unterteilt. Auf diese Weise ist die Unterteilung der Beleuchtung für unterschiedliche Funktionen vereinfacht.

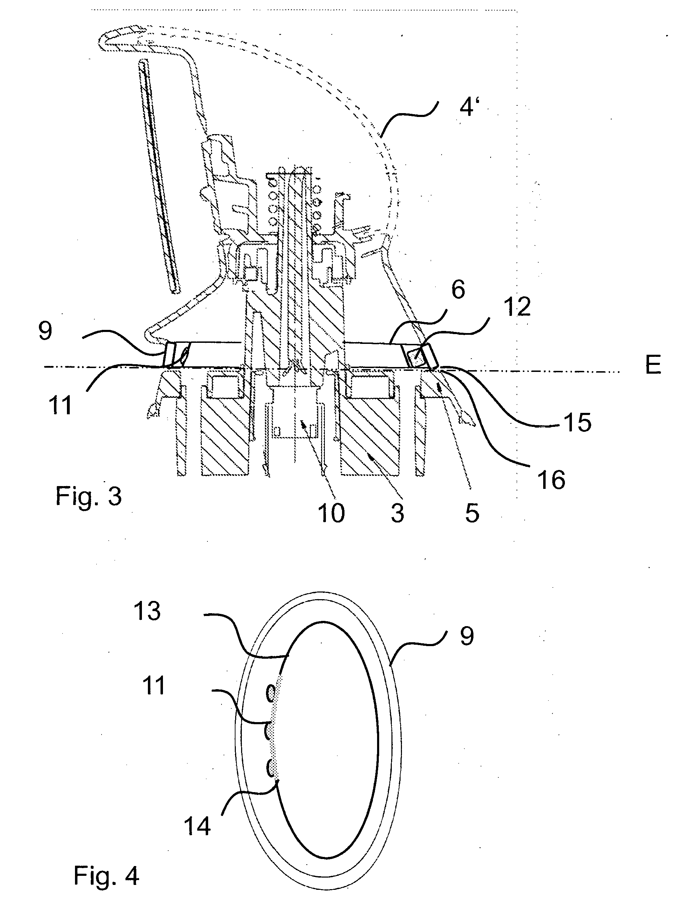

Fig. 3 zeigt einen Längsschnitt durch die Drehachse des Ausführungsbeispiels nach Fig. 1 Der Spiegelfuß 3 trägt für die Abklapp- und Drehbewegung des Spiegelkopfes 2 einen Hohlniet oder einen Abklappmotor. Die Drehachse ragt in den Spiegelkopf und der Träger des Spiegelkopfes ist mit dieser Achse drehbar verbunden. Der untere Rand der Gehäuseabdeckung 4,4' des Spiegelkopfes bewegt sich beim Abklappen über die Ebene E, die gestrichelt eingezeichnet ist. Die Spiegelfußabdeckung 5 mit dem Spiegelfuß bleibt starr mit dem Fahrzeug verbunden. Das Beleuchtungs-Zwischenstück 6 ist am unteren Rand der Gehäuseabdeckung 4,4' montiert und ist in diesem Beispiel starr mit der Gehäuseabdeckung 4, 4' verbunden. Das Beleuchtungs-Zwischenstück 6 weist eine geringe Bauhöhe auf und ist daher einfach zu integrieren.

Im Schnittbild ist das Lichtfenster 9 zu sehen, das den gesamten unteren Rand der Gehäuseabdeckung abschließt. Hinter dem Lichtfenster 9 ist eine LED 11 angeordnet, die auf einer Gehäuserückwand 13 mit einer Leiterplatte 14 montiert ist. Das Beleuchtungs-Zwischenstück 6 wird als Modul von unten auf die Gehäuseabdeckungen 4, 4' befestigt. Alle Befestigungsarten sind dabei denkbar.

Soll der Spiegel keinen Beleuchtungselements aufweisen, wird ein von den Außendimensionen baugleiches Abdeckungsstück 4" montiert. Dieses Abdeckungsstück 4" ist ringförmig ausgebildet. Das Beleuchtungs-Zwischenstück 6 ist von allen Seiten sichtbar und weist eine geschlossene, ellipsoide Außenkontur auf. Das Beleuchtungs-Zwischenstück umfasst einen inneren Hohlraum und ist somit ringförmig ausgebildet. Der Begriff ellipsoide Kontur des Beleuchtungs-Zwischenstücks soll dabei Konturen vom Kreis, über eine Ellipse, sowie gepresste oder gestauchte Ellipsen oder Rechteckstrukturen mit abgeflachten Ecken sowie geschlossene Freiformen, die zu ringförmigen Zwischenstücken führen, umfassen.

Das Beleuchtungs-Zwischenstück 6 wird über einen Kabelbaum, der durch den Hohlniet in das Innere des Spiegelkopfes geführt wird, mit elektrischer Spannung versorgt. Die Kontaktierung wird über Steckverbinder, der am Beleuchtungs-Zwischenstück angebracht ist erreicht. Die untere Abschlusskante 15 ist so ausgebildet, dass sie sich leicht gegen die Spiegelfußabdeckung bewegen kann, aber keinen zu großen Spalt gegen die Spiegelfußabdeckung aufweist, um Probleme mit Windgeräuschen zu vermeiden. Es ist auch möglich die untere Abschlusskante 15 mit einer angespritzten Dichtung zu versehen.

In einer alternativen Ausführungsform ist das Beleuchtungs-Zwischenstück 6 nicht mit den Bauteilen des schwenkbaren Spiegelkopfes sondern mit der Spiegelfußabdeckung 5 verbunden. Das Beleuchtungs-Zwischenstück wird dann mit einer oberen Abschlusskante 16 ausgebildet, die gegen die Gehäuseabdeckungen 4,4' bewegbar ist. Die elektrische Versorgung in einer solchen Anordnung erfolgt über Abzweige des Kabelbaums im Spiegelfuß oder aber über eine elektrische Verbindung aus dem Spiegelkopf. Soll keine Beleuchtung im Spiegel montiert werden, wird das Beleuchtungs-Zwischenstück 6 durch ein Fuß - Abdeckteil 17, das lediglich aus einem einfachen Ring aus demselben Material wie die Fußabdeckung besteht, ersetzt.

Durch das Beleuchtungs-Zwischenstück werden für beleuchtete oder unbeleuchtete Außenspiegel dieselben Gehäuseabdeckungen verwendet und nur entweder das Beleuchtungs-Zwischenstück oder das Abdeckstück mit denselben Außenmaßen eingesetzt.

Figur 4 bis Fig. 6 zeigen verschiedene Ausführungsformen des erfindungsgemäßen Beleuchtungs-Zwischenstückes 6 in Aufsicht. Das Lichtfenster 9 und die Gehäuserückwand 13 bilden einen Ring, der einen inneren Hohlraum umschließt. In Beispiel werden drei LEDs 11 montiert, die auf der Leiterplatte 14 aufgebracht sind. Die Leiterplatte erstreckt sich dabei nur im Bereich der LEDs. Die LEDs scheinen durch das Lichtfenster und beleuchten vorzugsweise den vorderen Bereich des Beleuchtungs-Zwischenstücks 6. In einer anderen Ausführungsform werden die LEDs über den gesamten inneren Bauraum des Beleuchtungs-Zwischenstücks verteilt. Dabei ist es sinnvoll, die LEDs auf eine flexible Leiterplatte 14 zu montieren und diese im Gehäuse des Beleuchtungs-Zwischenstücks zu befestigen.

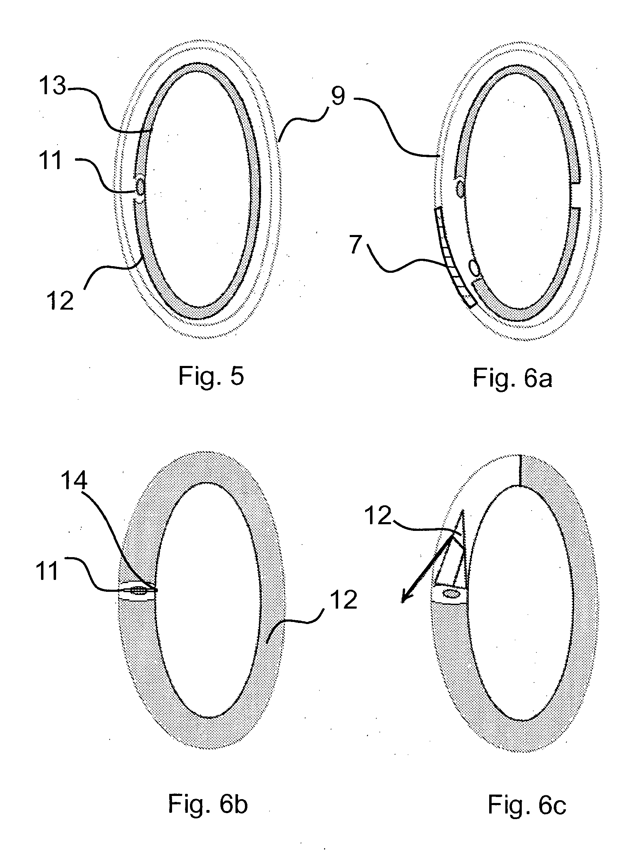

Fig. 5 zeigt eine Ausführungsform des Beleuchtungs-Zwischenstücks 6 mit einem integrierten Lichtleiter 12. Das Licht der LED 11 wird in den Lichtleiter 12 eingekoppelt, der sich entlang der Kontur des Lichtfensters 9 erstreckt. Wird die LED aktiviert wird das gesamte Beleuchtungs-Zwischenstück 6 ausgeleuchtet. Alternativ dazu wird das Lichtfenster 9 durch Abdeckungen 7 unterbrochen, die Licht vom Fahrer oder vor anderen Verkehrsteilnehmer abschirmen. In Figur 6a ist eine zwei LEDs installiert, die einen getrennten Bereich des Beleuchtungs-Zwischenstücks ausleuchtet. Dadurch lassen sich unterschiedliche Beleuchtungsfunktionen realisieren.

Es ist auch die Ausführung mit mehreren Lichtleiterabschnitten denkbar, die jeweils von LEDs mit Licht gespeist werden.

In einer alternativen Ausführungsform nach Fig. 6b bildet das Lichtfenster direkt einen Lichtleiter, in den das Licht mindestens einer LED eingespeist wird. Die LEDs ragen dabei in den Lichtleiter hinein, oder der Lichtleiter 9 ist so ausgebildet, dass Verzweigung entsteht, in die das Licht eingekoppelt wird.

In der Ausführungsform nach Figur 6c wird ein Umlenkelement 18 verwendet, das als Prisma ausgebildet ist. Die prismatische Struktur kann dabei weitere Flächen als das nur schematisch dargestellte Bild aufweisen. Die Einkopplung muss nicht zwangsweise an der Stirnseite erfolgen, sondern kann auch von unten oder oben auf das Prisma erfolgen. Mit der Umlenkoptik ist es möglich Licht umzulenken, um es entweder in Richtung Fahrer oder vom Fahrer weg auszurichten.

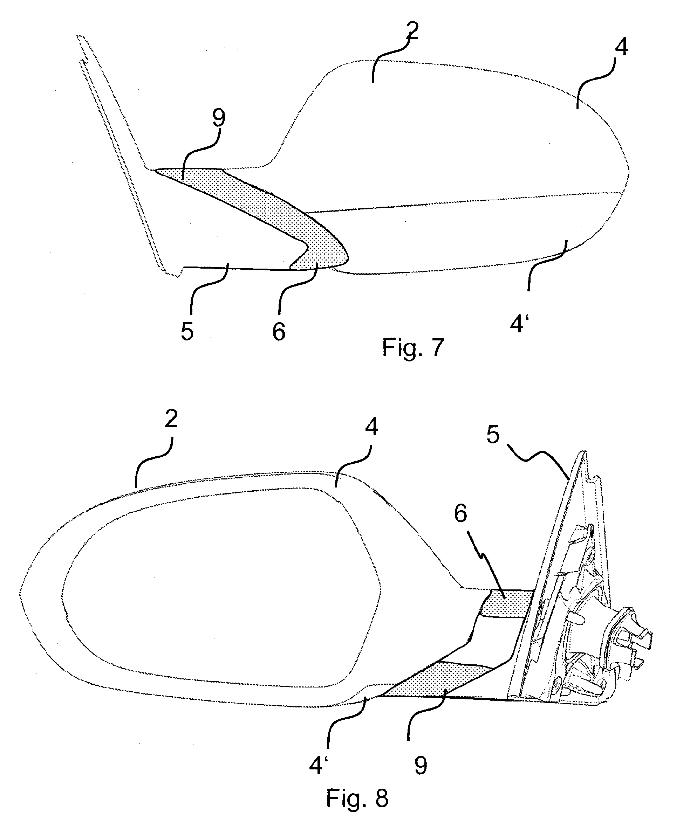

Figur 7 und Fig. 8 zeigen einen Außenspiegel wie er für die Montage am Spiegeldreieck des Fahrzeugs gebräuchlich ist. Das Beleuchtungs-Zwischenstück 6 wird auch in dieser Ausführung zwischen Spiegelfuß und Spiegelkopf montiert und kann sowohl starr mit der Spiegelfußabdeckung 5 oder starr mit der Gehäuseabdeckung 4, 4' verbunden sein. Je nach Ausführung dreht sich das Beleuchtungs-Zwischenstück mit dem Spiegelkopf mit oder bleibt starr mit dem Spiegelfuß verbunden. Für die unbeleuchteten Außenspiegel wird wieder ein Gehäuseelement verwendet, das der Außendimension des Beleuchtungs-Zwischenstücks entspricht.

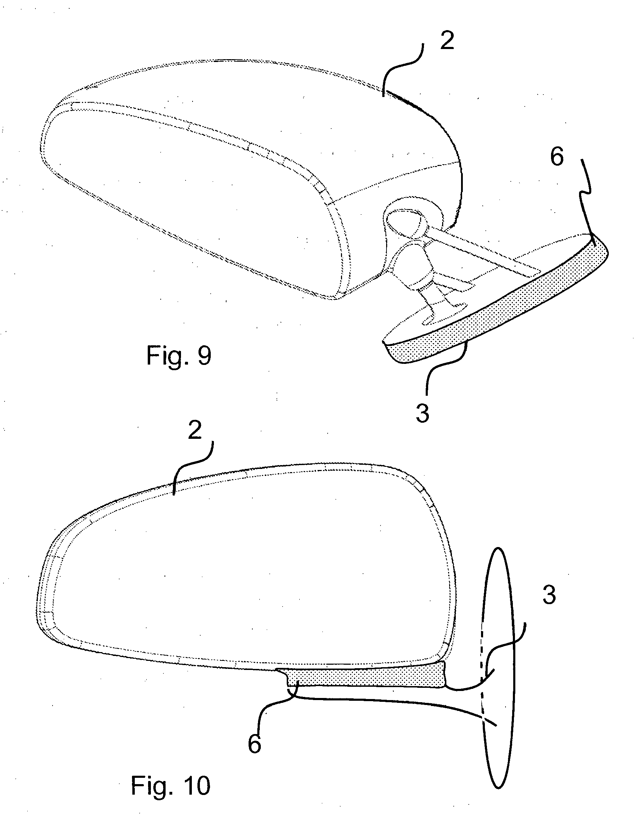

Fig. 9 zeigt eine Ausführungsform, die unter der EP 10180683 angemeldet ist. Zwischen Anbauebene am Fahrzeug und dem schwenkbaren Spiegelkopf ist das Beleuchtungs-Zwischenstück 6 als ringförmiges Bauteil eingebaut.

Figur 10 zeigt einen Außenspiegel, der auf einem Spiegelfuß aufsetzt, der als Schwinge vom Spiegeldreieck aus ausgebildet ist. Der Spiegelfuß verbindet den Spiegelkopf 2 gelenkig mit dem Fahrzeug. Der Spiegelfuß weist ein Beleuchtungs-

Zwischenstück auf, das zwischen dem Spiegelfuß oder der Spiegelfußabdeckung und dem Spiegelkopf eingeschoben ist.

Die verwendeten Leuchtmittel sind vorzugsweise LEDs, aber die Erfindung ist nicht auf die Verwendung dieser Leuchtmittel beschränkt. Auch die Verwendung von Glühlampen, EL Folien, OLEDs oder weiteren Entwicklungen von Leuchtmitteln ist umfasst.

### Legende:

- 1: Außenspiegel
- 2: Spiegelkopf
- 3: Spiegelfuß
- 4,4': Gehäuseabdeckung
- 5: Spiegelfußabdeckung
- 6: Beleuchtungs-Zwischenstück
- 7: Abdeckung
- 8: Öffnung für Spiegelglas
- 9: Lichtfenster
- 10: Hohlniet
- 11: LED
- 12: Lichtleiter
- 13: Gehäuserückwand
- 14: Leiterplatte
- 15: Abschlusskante unten
- 16: Abschlusskante oben
- 17: Fuß-Abdeckteil
- 18: Umlenkoptik

## Patentansprüche

1. Außenspiegelanordnung mit einem Spiegelfuß und einem drehbar gelagerten Spiegelkopf, wobei Spiegelkopf (2) und Spiegelfuß mit Gehäuseabdeckungen (4, 4') und Spiegelfußabdeckung (5) verkleidet sind und die Außenspiegelanordnung (1) mindestens ein beleuchtetes Element aufweist, wobei das beleuchtete Element ein Beleuchtungs-Zwischenstück (6) ist, das zwischen Spiegelkopf (2) und Spiegelfuß (3) eingebaut ist, **dadurch gekennzeichnet, dass** das Beleuchtungs-Zwischenstück eine geschlossene ellipsoide Außenkontur mit mindestens einem der Außenkontur des Beleuchtungs-Zwischenstücks folgenden Lichtfenster (9) aufweist, das von außen von allen Seiten sichtbar ist.

2. Außenspiegelanordnung nach Anspruch 1 **dadurch gekennzeichnet, dass** das Beleuchtungs-Zwischenstück (6) mit der mindestens einen Gehäuseabdeckung (4, 4') des Spiegelkopfes starr verbunden ist.

3. Außenspiegelanordnung nach Anspruch 1 **dadurch gekennzeichnet, dass** das Beleuchtungs-Zwischenstück (6) mit der mindestens einen Spiegelfußabdeckung (5) des Spiegelfußes starr verbunden ist.

4. Außenspiegelanordnung nach Anspruch 1 **dadurch gekennzeichnet, dass** das Beleuchtungs-Zwischenstück (6) mindestens ein Leuchtmittel (11) und /oder mindestens ein Lichtleiterstück (12) aufweist

5. Außenspiegelanordnung nach Anspruch 1 **dadurch gekennzeichnet, dass** das mindestens eine Lichtleiterstück (12) paraliel zum Lichtfenster (9) angeordnet ist.

6. Außenspiegelanordnung nach Anspruch 4 **dadurch gekennzeichnet, dass** das mindestens eine Lichtleiterstück (12) das Lichtfenster (9) ersetzt.

7. Außenspiegelanordnung nach Anspruch 1 **dadurch gekennzeichnet, dass** das Beleuchtungs-Zwischenstück mindestens einen Umlenkoptik enthält.

8. Außenspiegelanordnung nach Anspruch 4 **dadurch gekennzeichnet, dass** die mindestens ein Leuchtmittel (11) auf einer Leiterplatte (14) aufgebracht ist.

9. Außenspiegelanordnung nach Anspruch 8 **dadurch gekennzeichnet, dass** die Leiterplatte (14) eine flexible Leiterplatte ist.

10. Außenspiegelanordnung nach Anspruch 1 **dadurch gekennzeichnet, dass** die eine Außenkante (15, 16) des Beleuchtungs-Zwischenstücks (6) so ausgebildet ist, dass sie über Gehäuseabdeckungen bewegbar ist.

11. Außenspiegelanordnung nach Anspruch 1 **dadurch gekennzeichnet, dass** die eine Außenkante (15, 16) des Beleuchtungs-Zwischenstücks (6) mit einer angespritzten Dichtung ausgebildet ist.

12. Außenspiegelanordnung nach Anspruch 1 **dadurch gekennzeichnet, dass** mindestens eine Lichtfunktion, wie Blinker, Warnanzeige für Assistenzsysteme, Tagfahrlicht, Positionslicht, Sicherheitslicht, Blaulicht realisiert ist.

## Claims

1. Exterior rear view mirror assembly with a mirror base and a rotatable mirror head in which the mirror head (2) and mirror base are covered by a casing (4, 4') and mirror-base housing (5) and the wing mirror assembly has at least one illuminated element, wherein the illuminated element is a lighting connector (6) that is situated between the mirror head (2) and the mirror base (3), **characterised in that** the lighting connector (6) has an elliptical shape with at least one light window (9) that follows the contour of the lighting connector and that is visible from all angles.

2. Exterior rear view mirror assembly according to claim 1 **characterised in that** the lighting connector (6) is fixed rigidly to at least one part of the mirror-head casing (4, 4').

3. Exterior rear view mirror assembly according to claim 1 **characterised in that** the lighting connector (6) is fixed rigidly to at least one part of the mirror-base casing (5).

4. Exterior rear view mirror assembly according to claim 1 **characterised in that** the lighting connector (6) has at least one illuminant (11) and/or at least one light conductor (12).

5. Exterior rear view mirror assembly according to claim 1 **characterised in that** the at least one light conductor (12) is assembled parallel to the light window (9).

6. Exterior rear view mirror assembly according to claim 4 **characterised in that** the light window (9) is replaced by the at least one light conductor (12).

7. Exterior rear view mirror assembly according to claim 1 **characterised in that** the lighting connector contains at least one deflector.

8. Exterior rear view mirror assembly according to claim 4 **characterised in that** the illuminant (11) is assembled on a circuit board (14).

9. Exterior rear view mirror assembly according to claim 8 **characterised in that** the circuit board (14) is a flexible circuit board.

10. Exterior rear view mirror assembly according to claim 1 **characterised in that** one of the outer edges (15, 16) of the lighting connector (6) is built so that it can be moved through the casing.

11. Exterior rear view mirror assembly according to claim 1 **characterised in that** one of the outer edges (15, 16) of the lighting connector (6) has an injection-moulded gasket.

12. Exterior rear view mirror assembly according to claim 1 **characterised in that** at least one light function is included, such as indicators, warning display for driving assistance systems, daytime running lights, cornering lights, safety lights, blue lights.

## Revendications

1. Ensemble formant rétroviseur extérieur comportant une embase de rétroviseur et une tête de rétroviseur montée de manière rotative, dans lequel la tête de rétroviseur (2) et l'embase de rétroviseur sont recouvertes par des recouvrements de boîtier (4, 4') et un recouvrement d'embase de rétroviseur (5), et l'ensemble formant rétroviseur extérieur (1) comporte au moins un élément lumineux, dans lequel l'élément lumineux est un élément intermédiaire d'éclairage (6) qui est disposé entre la tête de rétroviseur (2) et l'embase de rétroviseur (3), **caractérisé en ce que** l'élément intermédiaire d'éclairage présente un contour extérieur ellipsoïde fermé, avec au moins une fenêtre de lumière (9) suivant le contour extérieur de l'élément intermédiaire qui est visible de l'extérieur de tous les côtés.

2. Ensemble formant rétroviseur extérieur selon la revendication 1, **caractérisé en ce que** l'élément intermédiaire d'éclairage (6) est relié de manière rigide au au moins un recouvrement de boîtier (4, 4) de la tête de rétroviseur.

3. Ensemble formant rétroviseur extérieur selon la revendication 1, **caractérisé en ce que** l'élément intermédiaire d'éclairage (6) est relié de manière rigide au au moins un recouvrement d'embase de rétroviseur (5) de l'embase de rétroviseur.

4. Ensemble formant rétroviseur extérieur selon la revendication 1, **caractérisé en ce que** l'élément intermédiaire d'éclairage (6) présente au moins une source d'éclairage (11) et/ou au moins un élément conducteur de lumière (12).

5. Ensemble formant rétroviseur extérieur selon la revendication 1, **caractérisé en ce que** le au moins un élément conducteur de lumière (12) est disposé parallèlement à la fenêtre de lumière (9).

6. Ensemble formant rétroviseur extérieur selon la revendication 4, **caractérisé en ce que** le au moins un élément conducteur de lumière (12) remplace la fenêtre de lumière (9).

7. Ensemble formant rétroviseur extérieur selon la revendication 1, **caractérisé en ce que** l'élément intermédiaire d'éclairage comprend au moins une optique de déflexion.

8. Ensemble formant rétroviseur extérieur selon la revendication 4, **caractérisé en ce que** la au moins une source d'éclairage (11) est montée sur une carte de circuits imprimés (14).

9. Ensemble formant rétroviseur extérieur selon la revendication 8, **caractérisé en ce que** la carte de circuits imprimés (14) est une carte de circuits imprimés flexible.

10. Ensemble formant rétroviseur extérieur selon la revendication 1, **caractérisé en ce qu'**un bord extérieur (15, 16) de l'élément intermédiaire d'éclairage (6) est formé de manière à ce qu'il soit mobile sur le recouvrement de boîtier.

11. Ensemble formant rétroviseur extérieur selon la revendication 1, **caractérisé en ce qu'**un bord extérieur (15, 16) de l'élément intermédiaire d'éclairage (6) est formé d'un seul tenant avec un joint d'étanchéité moulé par injection.

12. Ensemble formant rétroviseur extérieur selon la revendication 1, **caractérisé en ce que** au moins une fonction d'éclairage est réalisée, comme des clignotants, des voyants lumineux pour système d'assistance, des feux diurnes, des feux de position, des éclairages de sécurité, un gyrophare bleu.
